# EUROPEAN PATENT APPLICATION

(11) **EP 2 653 212 A1**
(43) Date of publication of application: **23.10.2013**
(21) Application number: 11848330.4
(22) Date of filing: 23.10.2011
(51) Int. Cl.: B01D 71/34, B01D 69/12

(54) **METHOD FOR PREPARING LIQUID SEPARATION MEMBRANE COMPLEXED AND REINFORCED WITH POLYVINYLIDENE FLUORIDE**

(30) Priority: 16.12.2010 CN 201010590152
(71) Applicant: Tianjin Motimo Membrane Technology Co., Ltd., Tianjin 300457 (CN)
(72) Inventor: LIU, Jianli, Tianjin 300457 (CN); XIAO, Changfa, Tianjin 300457 (CN); HU, Xiaoyu, Tianjin 300457 (CN); ZHANG, Wujiang, Tianjin 300457 (CN); HOU, Ruobing, Tianjin 300457 (CN)
(74) Representative: Hryszkiewicz, Danuta
(86) International application number: PCT/CN2011/081157
(87) International publication number: WO 2012/079422

(57) **Abstract**

Disclosed is a method for preparing a liquid separation membrane complexed and reinforced with polyvinylidene fluoride, comprising the following steps: subjecting a polyvinylidene fluoride liquid separation membrane or a polypropylene liquid separation membrane prepared by thermally induced phase separation, as a base membrane, to infiltration with any one of water and weakly polar organic liquids such that the pores of the base film are filled with the liquid; coating the surface of the infiltrated base membrane with a polyvinylidene fluoride casting solution and then quickly immersing the membrane into a curing bath for curing such that a liquid separation membrane complexed and reinforced with polyvinylidene fluoride is obtained. The liquid separation membrane obtained by the method both has a good mechanical property and a high retention rate, and the skin layer is not liable to peel off during use.

## Description

The invention relates to the field of liquid separation membranes, and more particularly to a method for preparing a liquid separation membrane reinforced with polyvinylidene fluoride composite.

Due to excellent chemical and thermal stability, the liquid separation membrane of polyvinylidene fluoride has been widely used for treatment and reuse of industrial wastewater and domestic sewage as well as pretreatment of reverse osmosis process. In use, the liquid separation membrane of polyvinylidene fluoride is subjected to the impact of water flow (including cross-flow filtration, backwashing, etc.), air flow (including air scrubbing, aeration shaking, etc.), or a combination thereof. Thus, the liquid separation membrane requires a high strength for ensuring the normal operation, which is particularly prominent in a submerged membrane module adopted in the technical application process of a membrane bioreactor (MBR).

Conventionally, there are two methods for industrial preparation of the liquid separation membrane of polyvinylidene fluoride: one is an immersion precipitation method. The membrane prepared by the method has the advantages of high separation accuracy and good hydrophilicity, but the improvement of mechanical properties of the prepared membrane is usually restricted, and the strength of the liquid separation membrane prepared by the method is enhanced only through increasing the thickness of the membrane itself and a sponge layer thereof, however, the membrane permeability is usually reduced. The other is a thermally induced phase separation method. The membrane prepared by the method has the characteristic of better mechanical properties, but the filtering accuracy and the permeability cannot usually be balanced. According to the separation membrane formation principle, there is no a compact layer on the surface of the membrane prepared by the thermally induced phase separation method, the embedded pollutants are easily formed in the using process and difficult to remove, and the requirement on cleaning process is usually high. Therefore, how to ensure that the liquid separation membrane has both high interception accuracy and permeability and good mechanical properties has became an important subject of research and development of the liquid separation membrane.

At present, the methods for ensuring the mechanical properties and separation accuracy of the membrane mainly include as follows:

1. Chinese Patent Application No. 200380102726.6 with title of *Composite Porous Membrane* and Chinese Patent Application No. 200510013255.2 with title of *Method for Preparing Fiber-Reinforced Polyvinylidene Fluoride Hollow Fiber Microporous Membrane* disclose a method for preparing a liquid separation membrane. In the forming process of a liquid separation membrane such as a hollow fiber liquid separation membrane, the reinforced fiber and membrane casting solution pass through a spinneret and then enter a coagulating bath to form a hollow fiber membrane embedded with longitudinal reinforced fiber by the immersion precipitation method. The method only enhances the mechanical properties of the prepared membrane along the axial direction of reinforced fiber, but not the mechanical properties of the prepared membrane along the radial direction of reinforced fiber, such as the pressure resistance of the membrane.

2. Chinese Patent Application No. 200610013558.9 with title of *Method for Preparing Reticular Fiber Reinforced Polyvinylidene Fluoride Hollow Fiber Membrane* adopts the technical scheme that three processes of hollow fiber membrane formation, external weaving of a long fiber net, and recoating are included in the liquid separation membrane such as the hollow fiber liquid separation membrane embedded with a long fiber knitted net on the inner wall, so as to form a reticular fiber reinforced polyvinylidene fluoride liquid separation membrane. The method has the disadvantages that the process of weaving the long fiber net outside the hollow fiber membrane is more complex, and the recoating process is also required on this basis, thus the efficiency in the whole process is lower.

3. Chinese Patent Application No. 200710150253.7 with title of *Method for Preparing Nonwoven Tube Enhanced Polyvinylidene Fluoride Hollow Fiber Membrane* adopts the technical scheme that a nonwoven tube is manufactured by polyester staple fiber, the nonwoven tube is coated with casting solution of polyvinylidene fluoride after being enhanced by heat treatment at the temperature of 400 - 600°C, and then a nonwoven tube enhanced polyvinylidene fluoride liquid separation membrane is formed by the immersion precipitation method. The method has the disadvantages that the process of preparing the nonwoven tube with polyester staple fiber is more complex, thus the production efficiency of such kind of the enhanced liquid separation membrane is limited, and the requirement of sewage treatment to the scale of the separation membrane is difficult to meet.

4. U. S. Patent No.5472607 with title of *Hollow Fibersemipermeable Membrane of Tubular Braid* discloses a method for coating a casting solution of polyvinylidene fluoride on the surface of a braid; Chinese Patent Application No. 200810103819.5 with title of *Enhanced Tubular Porous Body Composite Membrane, Preparation Method thereof and Application thereof* discloses a method for improving the process above, including that the braid is soaked in the liquid with a certain viscosity and solidification, the liquid is filled in the pores of the braid, and then the braid is coated with two layers of membrane casting solution, so that the purposes of high strength, high flux, and no defect are achieved. However, the technical scheme has the disadvantages that the used reinforced material is polyethylene, polypropylene, polyamide, or polyester, which is different from polyvinylidene fluoride of a separation layer, the difference on compatibility exists, and the bonding strength is restricted inevitably, so that the process that the separation layer is peeled off from the surface of the braid exists during the high-intensity oscillation process (such as intensive aeration shaking process in the application process of MBR), high-strength backwashing process and dosing and backwashing process, the restoration of the cleaning and flux of membrane is limited, and in addition, the braid has larger porosity (mostly is 100 um above), so the water quality of filtrate has a bigger influence once the separation layer is peeled off.

5. Chinese Patent Application No. 200810202327.1 with title of *Method for Preparing Reinforced Composite Hollow Fiber Membrane by Thermally Induced Phase Separation* adopts the technical scheme that the membrane preparation process of the above method 4 is adopted, only the casting solution of polyvinylidene fluoride is replaced with a polyvinylidene fluoride membrane formation system formed by a thermally induced phase separation method, and other conditions are similar. The method has the disadvantages that the mechanical property is not the key factor that restricts its application of the liquid separation membrane prepared by the thermally induced phase separation method, the prepared membrane also has poor bonding strength similar to the method 4 during use, and the safety of filtrate cannot be ensured once the skin layer peels off.

In conclusion, developing the method for preparing the novel reinforced liquid separation membrane is significant for overcoming various problems existing in the prior art.

The invention provides a method for preparing a liquid separation membrane reinforced with polyvinylidene fluoride composite which has good mechanical properties and high interception accuracy and is not easy to peel off during use.

The technical scheme of the invention is described below.

A method for preparing a liquid separation membrane reinforced with polyvinylidene fluoride composite, comprises:
(1) providing a polyvinylidene fluoride liquid separation membrane or polypropylene liquid separation membrane prepared by a thermally induced phase separation method as a substrate membrane, soaking the substrate membrane with water or a weak polar organic liquid to make membrane pores of the substrate membrane filled with the liquid, the soaking time being between 0.5 s and 1 min, and the weak polar organic liquid being indissolvable and compatible with the polyvinylidene fluoride liquid separation membrane or polypropylene liquid separation membrane;
(2) coating a casting solution of polyvinylidene fluoride on the surface of the soaked substrate membrane obtained in step (1), and quickly soaking the substrate membrane in a coagulating bath heated to a temperature of 60 - 100°C for curing to yield the liquid separation membrane reinforced with polyvinylidene fluoride composite.

The polyvinylidene fluoride liquid separation membrane or polypropylene liquid separation membrane prepared by the thermally induced phase separation method comprises a hollow fiber membrane and a fiat membrane, and to enhance the porosity of the prepared composite reinforced liquid separation membrane and ensure the uniformity of coating, the polyvinylidene fluoride liquid separation membrane or polypropylene liquid separation membrane prepared by the thermally induced phase separation method is preferably 0.1 - 10 micrometers in pore size and 5 - 15 N in breaking strength.

The casting solution of polyvinylidene fluoride (i.e., the polyvinylidene fluoride membrane formation system in the thermally induced phase separation method) is same as that in the prior art, and prepared by deaeration of a mixture comprising polyvinylidene fluoride, a solvent, and an additive, and according to the mass percent, polyvinylidene fluoride accounts for 10 - 35%, the solvent accounts for 60 - 80%, and the additive accounts for 5 - 30%. Both the solvent and additive are same as those in the prior art. The solvent comprises various good solvents of polyvinylidene fluoride, such as N, N-dimethyl formamide, N, N-dimethyl acetamide, and dimethyl sulfoxide, and the additive comprises various water-soluble components such as polyethylene glycol, polyvinyl pyrrolidone, lithium chloride, and Tween 80.

The medium of the coagulating bath is same as that in the prior art, and can adopt water or an aqueous solution of a solvent.

The weak polar organic liquid is ethanol, glycerin, isopropyl alcohol, or polyethylene glycol with molecular weight of less than 600.

The polypropylene liquid separation membrane prepared by the thermally induced phase separation method can be suitable for the cases of low requirement for backwashing after being compounded.

Advantages of the invention are summarized below:
1. In the method for preparing the liquid separation membrane, the polyvinylidene fluoride liquid separation membrane or polypropylene liquid separation membrane provided with excellent mechanical properties and prepared by the thermally induced phase separation method is used as the substrate membrane, and after the substrate membrane pore is filled with water or the weak polar solvent through soaking, the casting solution of polyvinylidene fluoride is compounded outside the substrate membrane to form a liquid separation membrane structure with higher separation accuracy and anti-pollution capacity, so that the prepared liquid separation membrane has both good mechanical properties and higher interception accuracy, and meets the dual requirements of MBR and other application processes to the pore size and mechanical properties of the liquid separation membrane. Using water or the weak polar organic liquid for sufficient soakage is the key of the invention, the dissolution recovery of the solvent components in the casting solution to the pore structure on the surface of the polyvinylidene fluoride liquid separation membrane or polypropylene liquid separation membrane prepared by the thermally induced phase separation method can be avoided in the compounding process, and the membrane permeability is further ensured.
2. When both the substrate membrane and the casting solution are polyvinylidene fluoride, the method for preparing the liquid separation membrane can be called as bulk compounding, the matrix phase materials on the inner layer and outer layer do not have difference on compatibility, and the inner layer and outer layer can be more closely combined, which is significant for prolonging the service life of the liquid separation membrane by enhancing the anti-backwashing performance of the liquid separation membrane.
3. Both the thermally induced phase separation method and immersion precipitation method (also called solution phase inversion method) which are involved in the method for preparing the liquid separation membrane have realized the continuous and large-scale production in industrial circles, and especially, the method for preparing the casting solution by the immersion precipitation method is more mature, thus the rapid implementation of industrialization is favorable.

For further illustrating the invention, experiments detailing a method for preparing a liquid separation membrane reinforced with polyvinylidene fluoride composite are described below. It should be noted that the following examples are intended to describe and not to limit the invention.

### Example 1

(1) A polyvinylidene fluoride hollow fiber membrane prepared by the thermally induced phase separation method and provided with average pore size of 0.1 micrometer and breaking strength of 5 N is used as a substrate membrane, and then the substrate membrane is soaked for 0.5 s with ethanol at room temperature, so that the membrane pore of the polyvinylidene fluoride hollow fiber membrane is filled with liquid ethanol.

(2) Polyvinylidene fluoride accounting for 10% of total mass of the system, N,N-dimethyl formamide accounting for 80% of total mass of the system, and polyvinyl pyrrolidone accounting for 10% of total mass of the system are mixed, evenly dissolved, and deaerated to obtain a casting solution. The casting solution is evenly coated on the surface of the substrate membrane obtained in step (1) and filled with the liquid ethanol in the membrane pore, and then rapidly soaked in water at the temperature of 60°C for curing, so as to obtain the liquid separation membrane reinforced with polyvinylidene fluoride composite with breaking strength of 6.5 N and average pore size of 0.08 micrometer. The liquid separation membrane reinforced with polyvinylidene fluoride composite is continuously backwashed for 10 h under 0.1 MPa, and the inner layer is not separated from the outer layer.

### Example 2

(1) A polyvinylidene fluoride hollow fiber membrane prepared by the thermally induced phase separation method and provided with average pore size of 10 micrometer and breaking strength of 15 N is used as a substrate membrane, and then the substrate membrane is soaked for 30 s with glycerin at room temperature, so that the membrane pore of the polyvinylidene fluoride hollow fiber membrane is filled with glycerin.

(2) Polyvinylidene fluoride accounting for 35% of total mass of the system, N,N-dimethyl formamide accounting for 60% of total mass of the system, and polyethylene glycol accounting for 5% of total mass of the system are mixed, evenly dissolved, and deaerated to obtain a casting solution. The casting solution is evenly coated on the surface of the substrate membrane obtained in step (1) and filled with glycerin in the membrane pore, and then rapidly soaked in 50% dimethyl acetamide solution at the temperature of 100°C for curing, so as to obtain the liquid separation membrane reinforced with polyvinylidene fluoride composite with breaking strength of 17 N and average pore size of 0.05 micrometer. The liquid separation membrane reinforced with polyvinylidene fluoride composite is continuously backwashed for 10 h under 0.1 MPa, and the inner layer is not separated from the outer layer.

### Example 3

(1)A polyvinylidene fluoride hollow fiber membrane prepared by the thermally induced phase separation method and provided with average pore size of 0.5 micrometer and breaking strength of 5 N is used as a substrate membrane, and then the substrate membrane is soaked for 0.5 s with isopropyl alcohol at room temperature, so that the membrane pore of the polyvinylidene fluoride hollow fiber membrane is filled with isopropyl alcohol.

(2) Polyvinylidene fluoride accounting for 20% of total mass of the system, N,N-dimethyl formamide accounting for 50% of total mass of the system, and an additive comprising lithium chloride and Tween 80 with mass ratio 1:5 and accounting for 30% of total mass of the system are mixed, evenly dissolved, and deaerated to obtain a casting solution. The casting solution is evenly coated on the surface of the substrate membrane obtained in step (1) and filled with isopropyl alcohol in the membrane pore, and then rapidly soaked in water at the temperature of 60°C for curing, so as to obtain the liquid separation membrane reinforced with polyvinylidene fluoride composite with breaking strength of 6 N and average pore size of 0.1 micrometer. The liquid separation membrane reinforced with polyvinylidene fluoride composite is continuously backwashed for 10 h under 0.1 MPa, and the inner layer is not separated from the outer layer.

### Example 4

(1)A polyvinylidene fluoride hollow fiber membrane prepared by the thermally induced phase separation method and provided with average pore size of 10 micrometer and breaking strength of 15 N is used as a substrate membrane, and then the substrate membrane is soaked for 30 s with polyethylene glycol 600 at room temperature, so that the membrane pore of the polyvinylidene fluoride hollow fiber membrane is filled with polyethylene glycol 600.

(2) Polyvinylidene fluoride accounting for 35% of total mass of the system, dimethyl sulfoxide accounting for 60% of total mass of the system, and polyethylene glycol accounting for 5% of total mass of the system are mixed, evenly dissolved, and deaerated to obtain a casting solution. The casting solution is evenly coated on the surface of the substrate membrane obtained in step (1) and filled with polyethylene glycol 600 in the membrane pore, and then rapidly soaked in 50% dimethyl acetamide solution at the temperature of 100°C for curing, so as to obtain the liquid separation membrane reinforced with polyvinylidene fluoride composite with breaking strength of 17.3 N and average pore size of 0.06 micrometer. The liquid separation membrane reinforced with polyvinylidene fluoride composite is continuously backwashed for 10 h under 0.1 MPa, and the inner layer is not separated from the outer layer.

### Example 5

(1) A polyvinylidene fluoride hollow fiber membrane prepared by the thermally induced phase separation method and provided with average pore size of 1 micrometer and breaking strength of 10 N is used as a substrate membrane, and then the substrate membrane is soaked for 1 min with water at room temperature, so that the membrane pore of the polyvinylidene fluoride hollow fiber membrane is filled with water.

(2) Polyvinylidene fluoride accounting for 10% of total mass of the system, N,N-dimethyl formamide accounting for 80% of total mass of the system, and polyvinyl pyrrolidone accounting for 10% of total mass of the system are mixed, evenly dissolved, and deaerated to obtain a casting solution. The casting solution is evenly coated on the surface of the substrate membrane obtained in step (1) and filled with water in the membrane pore, and then rapidly soaked in water at the temperature of 70°C for curing, so as to obtain the liquid separation membrane reinforced with polyvinylidene fluoride composite with breaking strength of 11.8 N and average pore size of 0.08 micrometer. The liquid separation membrane reinforced with polyvinylidene fluoride composite is continuously backwashed for 10 h under 0.1 MPa, and the inner layer is not separated from the outer layer.

### Example 6

(1) A polypropylene hollow fiber membrane prepared by the thermally induced phase separation method and provided with average pore size of 0.5 micrometer and breaking strength of 10 N is used as a substrate membrane, and then the substrate membrane is soaked for 1 min with ethanol at room temperature, so that the membrane pore of the polypropylene hollow fiber membrane is filled with ethanol.

(2) Polyvinylidene fluoride accounting for 10% of total mass of the system, N,N-dimethyl formamide accounting for 80% of total mass of the system, and polyvinyl pyrrolidone accounting for 10% of total mass of the system are mixed, evenly dissolved, and deaerated to obtain a casting solution. The casting solution is evenly coated on the surface of the substrate membrane obtained in step (1) and filled with ethanol in the membrane pore, and then rapidly soaked in water at the temperature of 70°C for curing, so as to obtain the liquid separation membrane reinforced with polyvinylidene fluoride composite with breaking strength of 10.5 N and average pore size of 0.08 micrometer. The liquid separation membrane reinforced with polyvinylidene fluoride composite is continuously backwashed for 8 h under 0.1 MPa, and the inner layer is not separated from the outer layer.

## Claims

1. A method for preparing a liquid separation membrane reinforced with polyvinylidene fluoride composite, **characterized in that** the method comprises:
a) providing a polyvinylidene fluoride liquid separation membrane or polypropylene liquid separation membrane prepared by a thermally induced phase separation method as a substrate membrane, soaking the substrate membrane with water or a weak polar organic liquid to make membrane pores of the substrate membrane filled with the liquid, the soaking time being between 0.5 s and 1 min, and the weak polar organic liquid being indissolvable and compatible with the polyvinylidene fluoride liquid separation membrane or polypropylene liquid separation membrane; and
b) coating a casting solution of polyvinylidene fluoride on the surface of the soaked substrate membrane obtained in step (a), and quickly soaking the substrate membrane in a coagulating bath heated to a temperature of 60 - 100°C for curing to yield the liquid separation membrane reinforced with polyvinylidene fluoride composite.

2. The method of claim 1, **characterized in that** the polyvinylidene fluoride liquid separation membrane or polypropylene liquid separation membrane prepared by the thermally induced phase separation method is between 0.1 and 10 micrometers in pore size and between 5 and 15 N in breaking strength.

3. The method of claim 1, **characterized in that** the casting solution of polyvinylidene fluoride is prepared by deaeration of a mixture comprising polyvinylidene fluoride, a solvent, and an additive, and according to the mass percent, polyvinylidene fluoride accounts for 10 - 35%, the solvent accounts for 60 - 80%, and the additive accounts for 5 - 30%.

4. The method of claim 1, **characterized in that** a medium of the coagulating bath is water or an aqueous solution of a solvent.

5. The method of claim 1, **characterized in that** the weak polar organic liquid is ethanol, glycerin, isopropyl alcohol, or polyethylene glycol with molecular weight of less than 600.
